(19) **Europäisches Patentamt**
**European Patent Office**
**Office européen des brevets**

(11) **EP 1 598 386 B1**

(12) **EUROPEAN PATENT SPECIFICATION**

(45) Date of publication and mention
of the grant of the patent:
**02.05.2012 Bulletin 2012/18**

(51) Int Cl.:
***C08G 63/80*** (2006.01) ***C08J 3/12*** (2006.01)

(21) Application number: **04710971.5**

(86) International application number:
**PCT/JP2004/001537**

(22) Date of filing: **13.02.2004**

(87) International publication number:
**WO 2004/076526 (10.09.2004 Gazette 2004/37)**

(54) **PROCESS FOR PRODUCTION OF POLYESTER RESIN POWDER, PROCESS FOR PRODUCTION OF POLYESTER PREFORMS AND THERMAL TREATMENT EQUIPMENT FOR POLYESTER RESIN POWDER**

VERFAHREN ZUR HERSTELLUNG VON POLYESTERHARZPULVER, VERFAHREN ZUR HERSTELLUNG VON POLYESTERHARZVORFORMEN UND WÄRMEBEHANDLUNGSEINRICHTUNGEN FÜR POLYESTERHARZPULVER

PROCEDE DE PRODUCTION D'UNE POUDRE DE RESINE DE POLYESTER, PROCEDE DE PRODUCTION DE PREFORMES DE POLYESTER ET EQUIPEMENT DE TRAITEMENT THERMIQUE POUR POUDRE DE RESINE DE POLYESTER

(84) Designated Contracting States:
**DE**

(30) Priority: **28.02.2003 JP 2003052723**

(43) Date of publication of application:
**23.11.2005 Bulletin 2005/47**

(73) Proprietor: **Mitsubishi Chemical Corporation
Tokyo 108-0014 (JP)**

(72) Inventor: **KIMURA, Hisashi
Mitsubishi Chemical Corporation
Yokkaichi-shi, Mie
5108530 (JP)**

(74) Representative: **HOFFMANN EITLE
Patent- und Rechtsanwälte
Arabellastraße 4
81925 München (DE)**

(56) References cited:
**US-A- 4 165 420    US-A- 4 374 975
US-A- 5 408 035    US-B1- 6 451 966**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Process for producing polyester resin powder, process for producing polyester preform and apparatus for heat-treatment of polyester resin powder

### TECHNICAL FIELD

The present invention relates to a process for producing polyester resin powder. Particularly, it relates to a process for producing polyester resin powder by heat-treatment thereof, which process can attain more effective heat-treatment of the resin powder and provide products having more homogeneous qualities by the contact of polyester resin powder with a heated gas.

### BACKGROUND ART

Polyesters are generally produced by esterification of aromatic dicarboxylic acid such as terephthalic acid and diol such as ethylene glycol followed by melt-polymerization of the products of estrification, if necessarily, solid-state polymerization is applied to the products of melt-polymerization. While the rate-determining process of solid-state polymerization of polyester is the diffusion process of diol ingredients through resin powder. As a method to overcome this bottle necking, a method of raising temperature to increase the diffusion rate, a method of reducing particle size of resin to reduce the diffusion length, or the like are known.

Currently, as a continuous solid-state polymerization apparatus widely used for industrial practices, there is mentioned tower types of fixed bed (moving bed) apparatus in which a raw material is continuously supplied from the top then a product is discharged from the bottom. These types of apparatus give narrow distribution of residence time, however they have a drawback for handling of small size powder such as powder having average particle diameter of not more than 1 mm due to the occurrence of bridging. Accordingly, these types of apparatus are not suitable for the method described above, which uses the powder having a reduced particle diameter.

On the other hand, if a fluidized bed is formed by an inert gas flow, it is possible to bring small size resin powder having a particle diameter of about not more than 1.5 mm, into contact with the inactive gas effectively. Accordingly, it is preferable to form a fluidized bed in order to perform solid-state polymerization by the method that using powder having small particle size for shortening the reaction time to reduce the diffusion length. Many disclosures have been made on those kinds of technique using a fluidized bed including the application for solid-state polymerization of polyester (For example, referring to USP 4,165,420 and USP 4,205,157).

In case of such a process that product qualities such as molecular weight and contents of acetaldehyde are varied by a factor of reaction time (residence time), for example, such as solid-state polymerization of polyester, it is quite important to narrow the distribution of residence time as far as possible. Generally, since a fluidized bed forms perfect mixing layer, there is a drawback that the discharged products suffer from insufficient or excess reaction due to the wide distribution of residence time in the fluidized bed reactor when raw materials are supplied and products are discharged continuously in the continuous process including fluidized bed reactors. Therefore, the conventional method disclosed above of solid-state polymerization of polyester using a fluidized bed has a disadvantage of unstableness of the quality of product due to the wide distribution of residence time, because only one fluidized bed is used.

### DISCLOSURE OF THE INVENTION

The present invention is made based on the above-described circumstance. The object of the present invention is to provide a process for producing polyester resin powder by heat-treatment thereof, which process can attain more effective heat-treatment of the resin powder and provide products having more homogeneous qualities by the contact of polyester resin powder with a heated gas.

As a result of the present inventors' earnest study to attain the above object, it has been found that a continuous treatment operation can be attained and more homogeneous polyester resin powder can be provided by using plural treatment vessels which can form a fluidized bed in parallel, supplying a polyester resin powder to plural treatment vessels by switching over one by one, carrying out heat-treatment of the polyester resin powder in each vessel and discharging the treated polyester resin powder from each vessel one by one with different operational phases. The present invention has been attained on the basis of the above finding.

In the first aspect of the present invention, there is provided a process for producing polyester resin powder by heat-treatment thereof comprising holding the polyester resin powder in plural vessels arranged in parallel and subjecting the polyester resin powder to contact with a heated gas, which process comprises repeating the steps of:

(a) supplying a certain amount of polyester resin powder to said treatment vessels,

(b) carrying out heat-treatment of said polyester resin powder by supplying the heated gas to said treatment vessels for a certain period of time and

(C) discharging the treated polyester resin powder from said treatment vessels; and

which process carries out said steps (a), (b) and (c) successively with a different operational phase for each treatment vessel.

In the first aspect of the present invention described above, a heat-treatment apparatus is used to perform heat-treatment of polyester resin powder and said heat-treatment apparatus preferably comprises:

plural treatment vessels having a powder charging port (2) and a gas exhaust nozzle (5) equipped on its upper portion, a powder discharging port equipped on its lower portion, and a gas inlet (4) on the bottom portion;

a powder supply system (7) located at the upper stream of said powder charging port and having such function that the resin powder can be supplied to said objective charging port by switching over one by one;

a gas supply system (8) for supplying the gas to said gas inlets, which system (8) is located at the upper stream of said gas inlets and has a sufficient capacity of the gas flow so as to fluidize the resin powder in said vessels;

a heating system (10) for the gas supplied from said gas supply system;

flow control valves (9) located at each flow pass between said gas supply device (8) and said gas inlet (4); and

powder discharging valves (13) located at the down stream of powder discharging port (3) of each treatment vessel (1).

In the second aspect of the present invention, there is provided a process for producing a polyester preform comprising using the polyester resin powder produced by the process as defined in the above first aspect.

In the third aspect of the present invention, there is provided an apparatus for heat-treatment of polyester resin powder, which apparatus comprises:

plural treatment vessels having a powder charging port and a gas exhaust nozzle equipped on the upper portion, having a powder discharging port on the lower portion, and having a gas inlet on the bottom portion;

a powder supply system for feeding the resin powder to said charging ports switching over one by one, which system is located the upper stream of said powder charging port;

a gas supply system for supplying gas to said gas inlets, which system is located at the upper stream of said gas inlets and has a sufficient capacity of the gas flow so as to fluidize the resin powder in said vessels;

a heating system for the gas supplied from said gas supply system;

flow control valves located at each flow pass between said gas supply system (8) and said gas inlet(4): and

powder discharging valves located at the down stream of powder discharging port (3) of each treatment vessel (1).

BRIEF DESCRIPTION OF DRAWINGS

Figure 1 shows a flow chart of an embodiment of preferred heat-treatment apparatus for resin powder showing main features of the process of the present invention.

Figure 2 shows a flow chart of an example of a feature embodiment for powder supply system used in the heat-treatment apparatus.

Figure 3 shows a typical perspective view of another feature embodiment for the powder supply device used in the heat-treatment apparatus.

Figure 4 shows a flow chart of another embodiment of preferred heat-treatment apparatus for resin powder showing main features of the production method of the present invention.

Figure 5 shows a time schedule for every step of the heat-treatment process using a heat-treatment apparatus with 5 treatment vessels.

BEST MODE FOR CARRYING OUT THE INVENTION

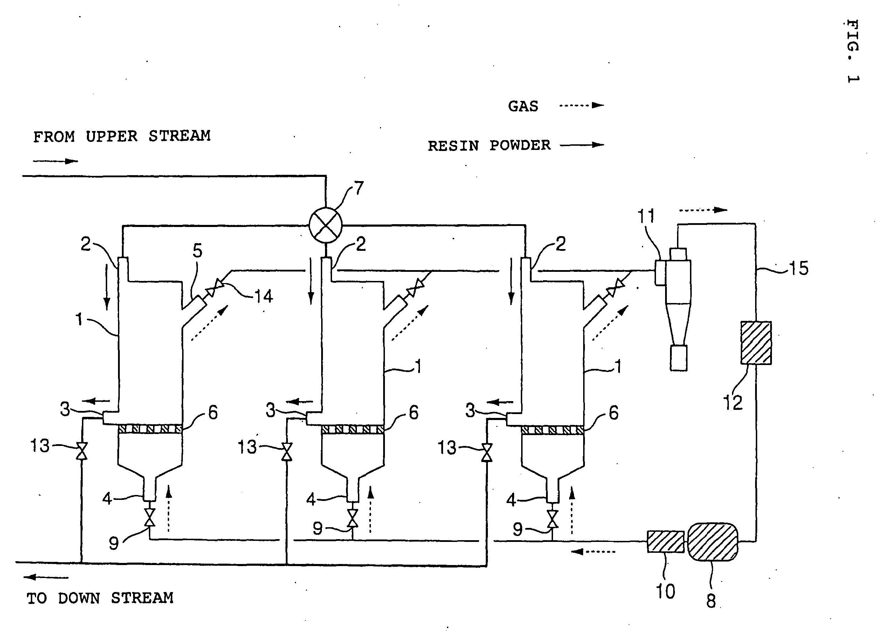

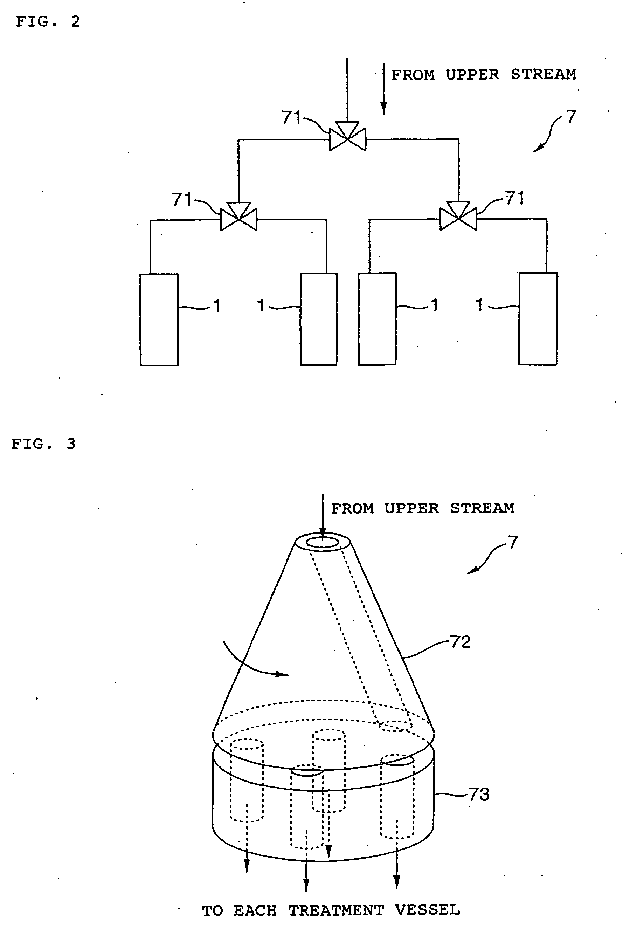

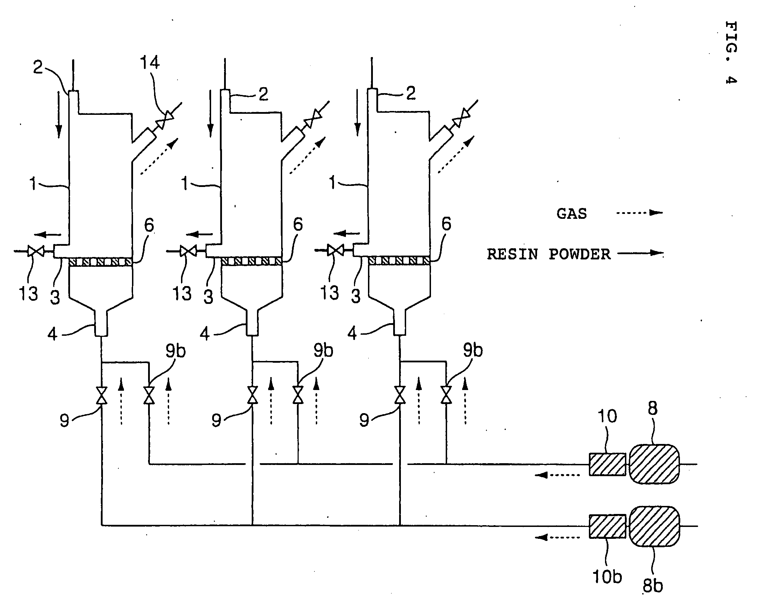

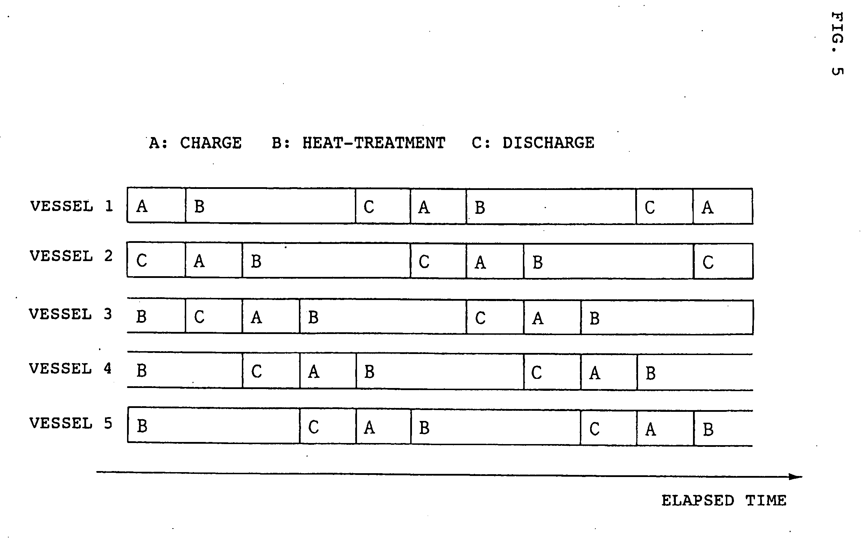

The present invention relates to a process for producing polyester resin powder and the invention will be explained in detail with reference to accompanying drawings. Figure 1 is a flow chart of an embodiment of a preferred heat-treatment apparatus for resin powder showing main features of the process of the present invention. Figure 2 is a flow chart of an embodiment of a feature for powder supply system used in the heat-treatment apparatus, which comprises plural three way valves. Figure 3 is a typical perspective view of another feature embodiment for powder supply system used in the heat-treatment apparatus; the system is a rotary type distributor. Figure 4 is a flow chart of another embodiment of preferred heat-treatment apparatus for resin powder showing main features of the process of the present invention, the apparatus has dual gas supply systems. Figure 5 is a time schedule for every step of the heat-treatment step using a heat-treatment apparatus with 5 treatment vessels. In the following description, the heat-treatment apparatus for resin powder abbreviates "heat-treatment apparatus" and the process for producing polyester resin powder by heat-treatment of polyester resin powder abbreviates "process for producing resin by heat-treatment".

First, a heat-treatment apparatus preferably used in the present invention will be explained. The heat-treatment apparatus has a function that heated gas comes into contact with resin powder, and is preferably used for solid-state polymerization of resin. The above heat-treatment apparatus is equipped with plural treatment vessels in parallel which can form a fluidized bed, each vessel of the apparatus is operated batch-wisely and switched over one by one so as to supply resin powder as a row material and the treated powder as product is discharged continuously.

The heat-treatment apparatus described above is shown in Figure 1, which comprises: plural treatment vessels having a powder charging port (2) and a gas exhaust nozzle (5) equipped on its upper portion, a powder discharging port equipped on its lower portion, and a gas inlet (4) on the bottom portion; a powder supply system (7) located at the upper stream of said powder charging port and having such function that the resin powder can be supplied to said objective charging port by switching over one by one; a gas supply system (8) for supplying the gas to said gas inlets, which system (8) is located at the upper stream of said gas inlets and has a sufficient capacity of the gas flow so as to fluidize the resin powder in said vessels; a heating system (10) for the gas supplied from said gas supply system; flow control valves (9) located at each flow pass between said gas supply device (8) and said gas inlet (4); and powder discharging valves (13) located at the down stream of powder discharging port (3) of each treatment vessel (1).

There is no limitation for the shape of the treatment vessel (1), usually the shape of vessel (1) is a columnar or polygon pillar shape and its central axis is aligned vertically. Preferably, a portion having larger horizontal cross section is provided on the upper portion. By designing the treatment vessel (1) in such a manner that a horizontal cross section is gradually increased from the middle of column to the top of the treatment vessel (1), the rising distance of resin powder at fluidized state can be reduced due to the reduction of linear gas velocity. There is no limitation for the height of the treatment vessel (1). The height is preferably designed from 3 to 5 times of the static layer height of supplied resin powder. The inner space of the vessel (1) may be divided into multiple spaces using partitions along its centerline.

Usually, the powder charging port (2) used for supplying the resin powder is equipped on the upper half portion of the treatment vessel (1) including the top portion, preferably equipped on the upper part of trisect of the height of the vessel. For example, it is equipped on the top of the vessel (1). The powder discharging port (3) from which resin powder is discharged as a product is equipped on the lower half portion of the treatment vessel (1) including the bottom portion, preferably equipped on the lower part of trisect of the height of the vessel. For example, it is equipped on the lower part of the side surface of the vessel (1). The gas inlet (4) from which high-temperature gas is introduced is usually equipped on the lowest portion of the bottom. The gas exhaust nozzle (5) from which used gas is exhausted is equipped on the upper half portion of the treatment vessel (1) including the top portion, preferably equipped on the upper part of trisect of the height of the vessel. For example, it is equipped on the top surface or side surface of the upper portion of the treatment vessel (1). Further, the gas dispersing plate (6) having porous structure by which supplied gas is dispersed is installed almost horizontally inside of the treatment vessel (1). The gas dispersing plate (6) is preferably installed just over the gas inlet (4) and just under the powder discharging port (3) as much as possible.

The powder supply system (7) is a system to supply the resin powder to each treatment vessel (1) switching over one by one. The powder supply system (7) can use various kinds of mechanism, provided it has the structure that can feed resin powder from a single raw material supply line to plural treatment vessels (1). Example thereof includes the mechanism with one or more three-way valves (7) that can select the direction of resin powder as shown in Figure 2. Such powder supply system (7) can feed resin powder to an objective treatment vessel (1) by using the combination of three-way valves (71) whose number is less by one than the number of treatment vessels (1) and switching over operation of flow passes.

Furthermore, as the another embodiment of the powder supply system (7), may use the rotary type distributor shown in Figure 3 that comprises almost a corn shaped rotary component (72) forming a flow pass inside along the corn surface, and a receiving component (73) having flow passes, which is arranged side by side, corresponding to the number of treatment vessel (1) and to a moving position of the end of said flow pass of the rotary component (72). Such powder supply system (7) is designed to feed resin powder to a objective vessel by controlling the rotation of the rotary component (72) to select a flow pass of receiving component (73) that is corresponded to the flow pass of said rotary component.

There is no limitation for gas supply system (8) shown in Figure 1 provided that it enables resin powder in the treatment vessel to fluidize. Typically, compressors or blowers for general purpose are used. If necessarily, a gas heating system (10) is connected on the down stream of the gas supply system (8) to supply heated gas for each treatment vessel (1) of the above-described heat-treatment apparatus. Examples of the gas heating system (10) include a known type of heat-exchanger such as plate or multi-tube type, or a furnace for gas heating.

Flow control valves (9) are located at each pass from the gas supply system (8) to the gas inlets (4) of each treatment vessel (1). Exemplary, they are located at each branched pass from a common flow pass to the gas inlets (4).

There is no limitation for the flow control valve (9) provided that it may individually and independently control gas flow rate supplied to each treatment vessel (1). Typically, air-actuated control valves may use which can control the opening of the valve. The operation of such kind of valves is controlled by the control system described later (without showing in Figures). Concretely, by adjustment of the opening of the flow control valve (9), an operation of a small amount of gas flow equivalent to a slow flow rate in the treatment vessels (1) may be carried out at the supply of the resin powder to the treatment vessels (1) and at the discharge of the resin powder from treatment vessels (1), and an operation of large amount of gas flow equivalent to a fast flow rate in treatment vessels (1) also may be carried out at the heat-treatment.

Powder discharging valves (13) is located at each down stream of the powder discharging port (3) to take out the treated resin powder from the treatment vessels (1). As the powder discharging valves, control valves such as an electromagnetic valve, which control closing operation as a gate valve, air-actuated valves and the like can be used.

As shown in Figure 1, the above heat-treatment apparatus may be equipped with a gas circulation line (15) which returns the used gas to the gas supply system from the gas exhaust nozzle (5) for each treatment vessel (1) so as to reduce the amount of gas consumption and hold down heating cost by utilization of the heat of high temperature gas. The reference letter (14) indicates a gas exhaust valve.

Furthermore, the above-described gas circulation line (15) is preferably equipped with a fine particle eliminator (11). Examples of the fine particle eliminator, known types of cyclone or bag filter can be used. In case where the fine particle eliminator (11) is equipped in the gas circulation line (15), the eliminator may prevent choking due to fine particles in the gas circulation line (15), each flow control valve (9), each gas dispersing plate (6), gas supplying system (8) and the like and reduce load of a impurity eliminator (12) described later. Also the eliminator may prevent lowering of product qualities due to the elimination of the fine particles less than lower limit of particle size. Additionally, the eliminator may improve the raw materials yield of the product and decrease an amount of the waste generation by re-selection of the usable resin powder from the fine particles which are removed and recovered, and mixing with raw materials to the treatment vessel (1).

Furthermore, the above-described gas circulation line (15) is preferably equipped with a impurity eliminator (12) for the elimination of water and/or organic impurities in order to improve the purity of the circulation gas to stabilize product qualities and increase a reaction rate by elimination of water, content of diol and ethylene glycol (EG) and so on. As the water and/or organic impurities, water, EG, acetaldehyde, cyclic trimer, linear origomer compounds having a low boiling point (low molecular weight), water generated by a polycondensation reaction, low boiling point compound (low molecular weight) such as EG and low boiling point compound (low molecular weight) such as acetaldehyde generated as by-product of thermal decomposition of resin. As the above impurity eliminator (12), gas burners, apparatus for oxidization of organic compounds with catalyst or heat by introducing oxygen (air) according to the analytical value of a content of organic compounds, dry or wet condenser, or EG scrubber.

Not illustrated in figures, the above-described heat-treatment apparatus may be designed in such a manner that the used gas is exhausted to outside of the system from the gas exhaust nozzle (5) of each treatment vessel and a flesh gas is always supplied to the gas inlet from the gas supply system (8) without using the gas circulation line (15). In that case, in view of the maintenance of better work environment and security, the apparatus is preferably equipped with the fine particle eliminator (11) at the down stream of the gas exhaust nozzle (5) to exhaust the used gas to the outside of the system after clarification.

The above heat-treatment apparatus may also be designed in such a manner that the temperature of high-temperature gas is adjustable depending on the proceeding of treatment processes such as solid-state polymerization, drying, crystallization and so on. Namely, in another embodiment of the present invention, plural gas supply system series are used, the temperatures of each gas supply system series are different each other and are adjusted depending on the objective temperature for the supply gas to the treatment vessel (1), and the gases from each series are mixed with an optional ratio to supply to each treatment vessel (1).

Specifically, as shown in Figure 4, in addition to the above constitution, the heat-treatment apparatus further comprises a second gas supply system (8b), equipped at the upper stream of each gas inlet (4) of each treatment vessel (1), which supplies a gas of different temperature against the gas supply system (8) to each gas inlet (4), and second flow control valves (9b) equipped in each flow pass of the said second gas supply system to each gas inlet (4).

An example of the heat-treatment apparatus, as shown in Figure 4, is equipped with two series of the gas supply system, which are the gas supply system (8) and the second gas supply system (8b). The apparatus may be equipped with further series of gas supply systems. The reference letter 10b in Figure 4 indicates the second gas supply system which is similar to the above gas supply system (10). In the embodiment of the heat-treatment apparatus illustrated in Figure 4, the temperature of the supply gas to the treatment vessel (1) may be selected, for example three temperature ranges described later may be selected. This system gives more homogeneous products and may also carries out three steps of process, which are crystallization, solid-state polymerization and cooling, in the same heat-treatment apparatus.

The above heat-treatment apparatus has such a constitution that a control system (without showing in Figures) such as a process control computer controls the operation of the powder supply system (7), each flow control valve (9) and each powder discharging valve (13). By this control system, the supply, heat-treatment and discharge of resin powder for each treatment vessel (1) can be conducted one by one with different operation phases. Therefore, the resin powder may be treated more effectively by the whole system due to almost the continuous operation of heat-treatment.

Namely, the above control system has:

a function of controlling said powder supply system (7) so as to supply a certain amount of resin powder to powder charging ports (2) of each treatment vessel (1) one by one,

a function that controls each flow control valve (9) to supply the heated gas for a certain period of time to the said each treatment vessel (1) one by one after the completion of supply of resin powder,

a function of controlling each powder discharging valve (13) one by one to discharge resin powder from the said each treatment vessel (1) after gas supply of a certain period of time, and

a function of operating the above controlling on the said powder supply system (7), each flow control valve (9) and each powder discharging valve (13) one by one with a different operational phase for each treatment vessel (1).

Furthermore, in the heat-treatment apparatus, as shown in figure 4, second flow control valves (9b) are controlled by a control system and the control system has a function to control each flow control valve (9) and each second flow control valve (9b) so as to supply a heated gas and/or a different temperature gas to each treatment vessel (1) one by one in addition to the above functions. In the heat-treatment apparatus, as shown in figure 4, the temperature of gas supplied to each treatment vessel (1) is independently controlled for each treatment vessel (1).

Next, the process for producing polyester resin powder of the present invention using the above-described heat-treatment apparatus will be explained with reference to the functions of the above-described apparatus.

The process for producing polyester resin powder of the present invention is a method of heat-treatment of polyester resin powder comprising steps of holding polyester resin powder in plural treatment vessels and subjecting the resin powder to contact with a heated gas. Preferably, this method are used for treatments of polyester resin such as drying, degassing and solid-state polymerization.

In the present invention, polyesters are used as resin powder. The present invention will be explained by solid-state polymerization of polyester as a typical example. All kinds of known polyester may be useable in the present invention. Concretely, there are exemplified the products of melt-polymerization of ester or transesterification product of aromatic dicarboxylic acid or derivative thereof such as terephthalic acid or dimethylterephthalate with diol ingredients such as ethylene glycol.

There is no limitation for the degree of polymerization of polyester. Considering that the degree of polymerization is increased in the heat-treatment of present invention, polyester having relatively lower intrinsic viscosity (IV) may be used. The said intrinsic viscosity is usually 0.20 to 0.66 dl/g, preferably 0.25 to 0.60 dl/g, especially preferably 0.27 to 0.55 dl/g. In the present invention, the increase of intrinsic viscosity (IV) in the treatment vessel (1) by heat-treatment is usually not less than 0.20 dl/g, preferably not less than 0.25 dl/g, especially preferably not less than 0.28 dl/g. When the increase of intrinsic viscosity (IV) is within the above ranges, the application of the present invention results in the improvement of productivity. Incidentally, the measurement of intrinsic viscosity is carried out by such a manner that the viscosity of a solution of polyester resin in a phenol/tetrachloroethane mixture (1/1 by weight) is determined by using Ubbelohde's viscometer at 30°C.

The weight average particle size of polyester resin powder is usually 0.05 to 1.0 mm, preferably 0.08 to 0.5 mm, especially preferably 0.10 to 0.40 mm. If the particle size is too small, a higher height of the treatment vessel (1) is required due to the increase of ratio of the layer height of fluidized state to that of static state, and yield of products may be lowered due to the increase of the amount of entrained powder from gas exhaust nozzles (5). A narrow particle size distribution of polyester resin powder is preferred. Typically, the peak width at half height of the distribution curve, which is expressed weight frequency as the ordinates and particle size as the abscissa, is usually not more than 2 times preferably not more than 1.5 times of the weight average of particle size. Additionally, the measurement of particle size is carried out by such a manner that resin powder is dispersed to water contained dispersant, then the particle size is determined with laser diffraction particle size analyzer at ordinary temperature.

The process for producing polyester resin powder in the present invention comprises:

(a) a step for feeding a certain amount of the polyester resin powder to a treatment vessel (1),

(b) a step for supplying a heated gas for a certain period of time to the said treatment vessel (1) for heat-treatment of the polyester resin powder,

(C) a step for discharging of the treated polyester resin powder from the said treatment vessel (1), and repeating the steps (a), (b) and (c); and carries out the operation one by one at the different phase of steps (a),(b) and (c) for each vessel with the operational control of the powder supply system (7), each flow control valve (9) and each powder discharging valve (13) by using the above control system.

The first step of the above heat-treatment supplies a certain amount of the polyester resin powder to the treatment vessel (1). A certain amount of the polyester resin powder is supplied to each treatment vessel (1) one by one by switching over the control system of the powder supply system (7) to distribute the supplied polyester resin powder to each powder charging port (2) of the treatment vessels (1) through a raw material supply line.

The second step carries out the heat-treatment of the polyester resin powder by supplying heated gas to the treatment vessel (1). The heat-treatment process is carried out in such a manner that a gas heated to a certain temperature is supplied from the gas supply system (8) to the gas inlets (4) of each treatment vessel (1) under a certain flow rate, and together the gas is supplied to the treatment vessel (1) after the completion of the first step for heat-treatment one by one with the control of flow control valves (9) of each treatment vessel (1).

In the second step described above, the operation of gas supply allows to start after or before the completion of the polyester resin powder charge. If gas supply starts before the completion of charge, preferred operation is to reduce linear velocity of gas at the beginning of polyester resin powder charge and to increase a flow rate gradually depending on the amount of polyester resin powder charge, or to increase the flow rate at the completion of polyester resin powder charge.

There is no limitation of the range of linear velocity (superficial velocity) of gas as far as the fluidized state can be maintained and polyester resin powder is not entrained. Usually, the velocity is from 0.1 to 1.0 m/s. Usually, gas is vertically blown from the bottom to the top of the gas dispersing plate (6) so that the gas flow blows up polyester resin powder to fluidize. In this treatment, polyester resin powder is blown up by the upward gas blow and falls down by the downward gravitational force. These random motions of polyester resin powder result in a completely mixed state. In addition, as supply gas, usually an inert gas, preferably nitrogen gas is used.

The third step is discharging the treated polyester resin powder from the treatment vessel (1). The treated polyester resin powder is discharged from the treatment vessel (1) where the second step has been completed one by one, by the opening of powder discharging valves (13) located the down stream of powder discharging ports (3). The polyester resin powder as a product is transferred to the following step (without showing in Figures) such as packaging.

In the present invention, the first to third steps for each treatment vessel (1) are repeated and operates one by one at the different phase for each treatment vessel (1). Namely, the operation time of the step is shifted so as to avoid over-lapping of the charge and discharge steps among plural treatment vessels (1) and the successive operation is carried out so that the idle time of each step for each treatment vessel (1) is minimized. This operation allows that the almost continuous operation of the treatment by fluidized bed can be attained and the heat-treatment period of products can be fixed for a certain period of time so that more effective heat-treatment of resin powders can be attained.

A typical operation of the continuous heat-treatment for polyester resin powder using the above heat-treatment apparatus is shown in the following Table. In the following Table, three treatment vessels (1):, vessel 1, vessel 2 and vessel 3 are used. One cycle of the heat-treatment operation comprises one hour charge of resin powder as a raw material (Briefly written "charge" in Table), then one hour heat-treatment (Briefly written "heat-treatment" in Table) and then one hour discharge of product (Briefly written "discharge" in Table).

Table 1

| After 0 hour: | Start charge for vessel 1. |
| --- | --- |
| After 1 hour: | After the charge for vessel 1 has been completed, change the direction of charge to vessel 2 by switching over the distributor. Run gas to vessel 1 to fluidize for starting heat-treatment. |
| After 2 hours: | After both heat-treatment of vessel 1 and charge to vessel 2 have been completed, start discharge from vessel 1. Run gas to vessel 2 to fluidize for starting heat-treatment. Change the direction of charge to vessel 3 by switching over the distributor. |
| After 3 hours: | After all three operations, discharge from vessel 1, heat-treatment of vessel 2 and charge to vessel 3 have been completed. Change the direction of charge to vessel 1 by switching over the distributor. Start discharge from vessel 2. Run gas to vessel 3 to fluidize for starting heat-treatment. |

(From now on, repeat these operations every hour with shifting operational phases.)

If a longer heat-treatment period comparing to the charge or discharge of polyester resin powder is required, it is preferable to conduct it by increasing the number of treatment vessels. For example, in case of the operation for the longer heat-treatment period of polyester resin powder, as shown in Figure 5, 5 vessels are used and operational phases are shifted.

Further, in a preferred embodiment of the present invention using the heat-treatment apparatus as shown in Figure 4, the above operation for each treatment vessel (1) is carried out with operational phase difference by controlling operations of the second flow control valves (9b) in addition to the above operation control. In the present invention, the gas temperature of the heat-treatment step of polyester resin (the above second step) is adjusted in three ranges depending on the degree of reaction proceeding.

Namely, a temperature of gas supplied to each treatment vessel (1) is adjusted so as to satisfy the following conditions;

$$120°C \leq T1 \leq 220°C$$

$$180°C \leq T2 \leq 250°C$$

$$20°C \leq T3 \leq 220°C \text{ (provided that } T1 < T2 \text{ and } T3 < T2)$$

Where T1 is the gas temperature at the start of heat-treatment, T2 is the gas temperature during heat-treatment, T3 is the gas temperature at the end of heat-treatment, and T1, T2 and T3 are measured at the entrance of the treatment vessel (1) during gas introduction.

The gas temperature T1 at the start of heat-treatment is usually from 120 to 220°C, preferably from 160 to 210°C, more preferably from 180 to 205°C.

The gas temperature T2 during heat-treatment is usually 180 to 250°C, preferably 190 to 245°C, especially preferably 200 to 240°C. The gas temperature T3 at the end of heat-treatment is usually 20 to 220°C, preferably 120 to 210°C, especially preferably 180 to 205°C. Each temperature described above should be adjusted so as to satisfy T1<T2 and T3<T2.

The gradual temperature increase from T1 of start to T2 of heat-treatment is preferred. As described above, rises and falls of the temperature are controlled by the following manner; for example, equipping two series of gas supply systems such as (8) and (8b), setting different gas temperatures of each series and supplying gas with a certain mixing rate of each series to each treatment vessel (1) depending on the objective temperature. For example, the operation control can be attained by increasing (decreasing) the gas flow rate of temperature T1 and decreasing (increasing) the gas flow rate of temperature T2, or by adjusting the output of the heating system (10) comparing the objective temperature to the actual temperature.

According to the present invention, the process for producing polyester resin powder by heat-treatment of polyester resin powder, the heat-treatment of resin powder such as solid-state polymerization comprises switching over the direction of supply to plural treatment vessels by the powder supply system (7), supplying resin powder to each treatment vessel (1) one by one, carrying out heat-treatment one by one for each treatment vessel (1) after the completion of the resin powder supply, discharging the powder from the treatment vessel (1) one by one after the completion of heat-treatment, and carrying out these operations for each treatment vessel (1) with the operational phase difference. Therefore, the operations of the whole system enable almost a continuous operation of fluidized bed and a constant heat-treatment period so that the more effective heat-treatment and the more homogeneous products can be attained.

Furthermore, according to the present invention, smaller attached devices for pipelines and the gas supply system (8) dealing with powder supply and discharge and gas supply can be used comparing to a conventional batch treatment using a single treatment vessel, because the successive operations of the treatment vessel (1) is carried out at the different timing one by one for each treatment vessel (1).

Polyester resin preform can be produced by use of the polyester resin powder produced by the above heat-treatment method of polyester resin powder, without preparing resin pellets. Basically, as a method for producing moldings such as bottle from polyester resin powder described above, conventional methods which use pellets can be used. An example of a known method comprises conducting a heat-treatment under an inert gas atmosphere such as air or a nitrogen between 110°C and 190°C for 2 to 24 hours, and melt-molding by a conventional molding machine. When the temperature and the period of time for heating are within the above range, it is preferable that moldings without the decrease of molecular weight and color changes at melt-molding can be obtained because of enough drying of the polyester resin powder.

If the average particle size of polyester resin powder is not more than 0.5 mm, the use of an agitation means equipped inside of the heat-treatment apparatus or a fluidized bed type-heat-treatment apparatus are particularly preferred because this may avoid the occurrence of aggregate due to the blocking of powders each other.

Polyester resin powder obtained by the heat-treatment according to the present invention may be molded to various kinds of moldings especially for useful packaging materials of foods and beverages by such a manner that bottles are produced by stretch blow molding of preform molded by injection molding or blow molding of a parison molded by extruder, trays or containers are produced by heat-molding of sheet molded by extruder, or film is produced by biaxial stretching the said sheet. Particularly the polyester resin powder is preferably used for a method by blow molding comprising preparing the preform by injection molding and biaxially stretching thereof. For examples, the polyester resin powder is preferably used for preparation of containers for carbonated drink, liquor, and liquid seasoning such as soy sauce, sauce, mirin, salad dressing. Further, by heat-setting thereof, they are preferably used for containers of beverages such as fruit juice, vitamin, flavor tea and mineral water.

EXAMPLES

The present invention is described in more detail by Examples.

(A) Apparatus:

An apparatus shown in Figure 1 is used. Namely, four treatment vessels (1) are arranged. The treatment vessels (1) are a columnar vessel having an inner-diameter of 1 m$\phi$ and a vertical length of 5 m from the top surface of the gas dispersing plate (6) to the bottom edge of the gas exhaust nozzle (5).

(B) Raw material:

Spherical homopolymer of polyethylene terephthalate resin having an intrinsic viscosity of 0.30 dl/g, a crystallinity of 40% and an average particle size of 0.3 mm are used.

(C) Heat-treatment method

The above raw material is supplied continuously at a rate of 100 kg/hour from the upper stream.

The raw material is continuously supplied into the first treatment vessel (1) (represented "Vessel 1" from now on) at a rate of 100 kg/hour for 1 hour through 0 hour later to one hour later with passing through nitrogen gas of 200°C at a superficial velocity of 0.6 m/s.

After one hour later, the powder supply system (7) is switched over to change the supply direction to Vessel 2. After that, the supply direction to vessels is changed at every hour in the following order: Vessel 3, Vessel 4, Vessel 1, Vessel 2, Vessel 3 one by one. From now on, the operation of the present invention will be explained in Vessel 1. The operation of other vessels is carried out same as in Vessel 1, but with different operational phases.

The temperature of supplied nitrogen gas is increased from 200°C to 230°C at a rate of 10°C/minute through one hour later to 1.5 hour later in vessel 1. The superficial velocity is held at 0.6 m/s in this period of time.

Through 1.5 hour later to 3.5 hour later, heat-treatment is carried out with keeping a temperature of supplied nitrogen gas of 230°C and a superficial velocity of 0.6 m/s.

Through 3.5 hour later to 4 hour later, the powder discharging valve (13) is opened to discharge the heat-treated product to the next process with decreasing supply nitrogen gas temperature to 200°C. The superficial velocity is held at 0.3 m/s in this period of time.

After the discharging is completed, the above steps are repeated considering that the operational phase back to start.

According to the above operation, polyethylene terephthalate resin having a suitable viscosity for melt molding is obtained continuously.

Incidentally, the superficial velocity of supply gas may be varied periodically in the above each step. Each treatment vessel (1) may be equipped with an agitating paddle inside or a fine particle eliminator such as cyclone or bag filter. When using a bag filter equipped inside, it is preferable to use a bag filter comprising heat-resistant materials durable not less than 250°C, particularly preferably a metallic filter comprising sintered metal. As the said metal, stainless steal is preferred in view of corrosion resistance and cost effectiveness.

(D) Molding:

After drying of polyethylene terephthalate resin obtained by the heat-treatment method previously described for 16 hours under nitrogen gas atmosphere of 145°C, a 33 g of preform of melt-moldings is molded with the injection molding machine (Nisei Plastic Industrial Co., Ltd., ASB-50TH) under the following conditions; cylinder setting temperature: 270°C, back pressure: about 1 MPa, injection period: about 13 seconds, molding cycle: about 40 seconds. The obtained preform is blow-molded by using a stretching blow molder (Mitsubishi Chemical Corporation) with a heating time of 75 seconds, to form a molded bottle of a content volume of 0.5L.

Thus a blow bottle suitable for the packaging of beverages is obtained.

INDUSTRIAL APPLICABILITY

The process for producing resin powder by heat-treatment, according to the present invention comprises switching over and supplying the resin powder to plural treatment vessels, carrying out heat-treatment one by one for each treatment vessel whose supply has been completed, discharging the powder from the treatment vessel one by one whose heat-treatment has been completed, and carrying out these operations for each treatment vessel with operational phase difference. By this process, it is possible to carry out almost continuous operation of fluidized bed and perform more effective heat-treatment. Moreover a batch operation of the heat-treatment itself in each treatment vessel allows to obtain more homogeneous quality of products.

**Claims**

1.  A process for producing polyester resin powder by heat-treatment thereof comprising holding the polyester resin powder in plural treatment vessels arranged in parallel and subjecting the polyester resin powder to contact with a heated gas, which process comprises repeating the steps of:

    (a) supplying a certain amount of polyester resin powder to said treatment vessels,
    (b) carrying out heat-treatment of said polyester resin powder by supplying the heated gas to said treatment vessels for a certain period of time and
    (C) discharging the treated polyester resin powder from said treatment vessels; and

    which process carries out said steps (a), (b) and (c) successively with a different operational phase for each treatment vessel.

2.  The process for producing polyester resin powder according to claim 1, wherein said heat-treatment is solid-state polymerization of polyester resin powder.

3.  The process for producing polyester resin powder according to claim 1 or 2, wherein an intrinsic viscosity of said polyester resin powder that is supplied to the treatment vessels is 0.20 to 0.66 dl/g.

4.  The process for producing polyester resin powder according to any one of claims 1 to 3, wherein an increase of intrinsic viscosity by heat-treatment in the treatment vessel is not less than 0.20 dl/g.

5.  The process for producing polyester resin powder according to any one of claims 1 to 4, wherein a weight average particle diameter of the polyester resin powder is 0.03 to 1.5 mm.

6.  The process for producing polyester resin powder according to any one of claims 1 to 5, wherein a gas temperature for heat-treatment of the polyester resin powder in the step (b) is adjusted to satisfy the following conditions;

$$120°C \leq T1 \leq 220°C$$

$$180°C \leq T2 \leq 250°C$$

    $20°C \leq T3 \leq 220°C$ (provided that T1 < T2 and T3 < T2)
    where T1 is the gas temperature at the start of heat-treatment, T2 is the gas temperature during heat-treatment and T3 is the gas temperature at the end of heat-treatment.

7.  The process for producing polyester resin powder according to any one of claims 1 to 6, wherein an inert gas is used as the gas supplied in the step (b) of heat-treatment of polyester resin powder.

8.  The process for producing polyester resin powder according to any one of claims 1 to 7, wherein a heat-treatment apparatus for the polyester resin powder is used and the heat-treatment apparatus further comprises:

plural treatment vessels having a powder charging port (2) and a gas exhaust nozzle (5) equipped on its upper portion, a powder discharging port equipped on its lower portion, and a gas inlet (4) on the bottom portion; a powder supply system (7) located at the upper stream of said powder charging port and having such function that the resin powder can be supplied to said objective charging port by switching over one by one; a gas supply system (8) for supplying the gas to said gas inlets, which system (8) is located at the upper stream of said gas inlets and has a sufficient capacity of the gas flow so as to fluidize the resin powder in said vessels; a heating system (10) for the gas supplied from said gas supply system; flow control valves (9) located at each flow pass between said gas supply device (8) and said gas inlet (4); and powder discharging valves (13) located at the down stream of powder discharging port (3) of each treatment vessel (1).

9. The process for producing polyester resin powder according to claim 8, wherein said heat-treatment apparatus has a control system which controls a powder supply system, each flow control valve and each powder discharging valve, which control system has:

a function of controlling said powder supply system so as to supply a certain amount of resin powder to powder charging ports of each treatment vessel one by one, a function that controls each flow control valve to supply the heated gas for a certain period of time to said each treatment vessel one by one after the completion of supply of resin powder, a function of controlling each powder discharging valve one by one to discharge resin powder from said each treatment vessel after gas supply of a certain period of time, and a function of operating the above controlling on said powder supply system, each flow control valve and each powder discharging valve one by one with a different operational phase for each treatment vessel.

10. The process for producing polyester resin powder according to claim 9, wherein said heat-treatment apparatus further comprises a second gas supply system (8b) which is located at the upper stream of the gas inlet and supplies gas having a different temperature from the gas supply system, and a second flow control valve (9b) which is equipped in each flow pass between said second gas supply system and said gas inlet and is controlled by a control system; and said control system has a function of controlling each flow control valve and said second flow control valve so as to supply heated gas and/or different temperature gas so that controls gas temperature independently for each treatment vessel.

11. The process for producing polyester resin powder according to any one of claims 8 to 10, wherein said heat-treatment apparatus further comprises a gas circulation line (15) for returning the gas exhausted from gas exhaust nozzles of each treatment vessel to the gas supply system.

12. The process for producing polyester resin powder according to any one of claims 8 to 11, wherein said heat-treatment apparatus further comprises a fine powder eliminator (11) which is located at the down stream of the gas exhaust nozzle or the gas circulation line.

13. The process for producing polyester resin powder according to any one of claims 8 to 12, wherein said heat-treatment apparatus further comprises an eliminator (12) for water and/or organic impurity.

14. A process for producing a polyester preform comprising using the polyester resin powder produced by the process as defined in any one of claims 1 to 13.

15. An apparatus for heat-treatment of polyester resin powder, which apparatus comprises:

plural treatment vessels having a powder charging port and a gas exhaust nozzle equipped on the upper portion, having a powder discharging port on the lower portion, and having a gas inlet on the bottom portion; a powder supply system for feeding the resin powder to said charging ports switching over one by one, which system is located the upper stream of said powder charging port; a gas supply system for supplying gas to said gas inlets, which system is located at the upper stream of said gas inlets and has a sufficient capacity of the gas flow so as to fluidize the resin powder in said vessels; a heating system for the gas supplied from said gas supply system; flow control valves located at each flow pass between said gas supply system (8) and said gas inlet(4): and powder discharging valves located at the down stream of powder discharging port (3) of each treatment vessel (1).

**Patentansprüche**

1. Verfahren zur Herstellung von Polyesterharzpulver durch dessen Wärmebehandlung, das das Halten des Polyesterharzpulvers in mehreren Aufbereitungsbehältern, die parallel angeordnet sind, und das Unterwerfen des Polyesterharzpulvers einer Kontaktierung mit erwärmtem Gas umfasst, wobei das Verfahren die Wiederholung der Schritte umfasst:

   (a) Zuführen einer bestimmten Menge an Polyesterharzpulver zu den Aufbereitungsbehältern,
   (b) Durchführen einer Wärmebehandlung des Polyesterharzpulvers, indem das erwärmte Gas den Aufbereitungsbehältern für eine bestimmte Zeitspanne zugeführt wird, und
   (c) Ablassen des behandelten Polyesterharzpulvers aus den Aufbereitungsbehältern; und

   wobei das Verfahren die Schritte (a), (b) und (c) nacheinander mit einer unterschiedlichen Fertigungsphase für jeden Aufbereitungsbehälter durchführt.

2. Verfahren zur Herstellung von Polyesterharzpulver gemäss Anspruch 1, wobei die Wärmebehandlung eine Festkörperpolymerisation des Polyesterharzpulvers ist.

3. Verfahren zur Herstellung von Polyesterharzpulver gemäss Anspruch 1 oder 2, wobei die Grenzviskosität des Polyesterharzpulvers, das den Aufbereitungsbehältern zugeführt wird, 0,20 bis 0,66 dl/g beträgt.

4. Verfahren zur Herstellung von Polyesterharzpulver gemäss irgendeinem der Ansprüche 1 bis 3, wobei der Anstieg der Grenzviskosität durch Wärmebehandlung in den Aufbereitungsbehältern nicht weniger als 0,20 dl/g beträgt.

5. Verfahren zur Herstellung von Polyesterharzpulver gemäss irgendeinem der Ansprüche 1 bis 4, wobei der gewichtsgemittelte Partikeldurchmesser des Polyesterharzpulvers 0,03 bis 1,5 mm beträgt.

6. Verfahren zur Herstellung von Polyesterharzpulver gemäss irgendeinem der Ansprüche 1 bis 5, wobei die Gastemperatur zur Wärmebehandlung des Polyesterharzpulvers in Schritt (b) eingestellt wird, um die folgenden Bedingen zu erfüllen:

$$120°C \leq T1 \leq 220°C$$

$$180°C \leq T2 \leq 250°C$$

$$20°C \leq T3 \leq 220°C \text{ (vorausgesetzt dass } T1 < T2 \text{ und}$$
$$T3 < T2 \text{ ist)}$$

   wobei T1 die Gastemperatur zu Beginn der Wärmebehandlung ist, T2 die Gastemperatur während der Wärmebehandlung ist und T3 die Gastemperatur am Ende der Wärmebehandlung ist.

7. Verfahren zur Herstellung von Polyesterharzpulver gemäss irgendeinem der Ansprüche 1 bis 6, wobei ein Inertgas als das Gas verwendet wird, das in Schritt (b) der Wärmebehandlung des Polyesterharzpulvers zugeführt wird.

8. Verfahren zur Herstellung von Polyesterharzpulver gemäss irgendeinem der Ansprüche 1 bis 7, wobei eine Wärmebehandlungsvorrichtung für das Polyesterharzpulver verwendet wird und die Wärmebehandlungsvorrichtung ferner umfasst:

   mehrere Aufbereitungsbehälter, die im oberen Bereich mit einem Pulverzuführanschluss (2) und einer Gasablassdüse (5), im unteren Bereich mit einem Pulverablassanschluss und einem Gaseinlass (4) im Bodenteil versehen sind;
   ein Pulverzuführsystem (7), das dem Pulverzuführanschluss vorgeschaltet ist und das eine solche Funktion besitzt, dass das Harzpulver zum Zielzuführanschluss durch separates Umschalten zugeführt werden kann; ein Gaszuführsystem (8), um das Gas zu den Gaseinlässen zuzuführen, wobei das System (8) den Gaseinlässen vorgeschaltet ist und eine ausreichende Gasflusskapazität besitzt, um das Harzpulver in den Behältern zu verwirbeln;

ein Heizsystem (10) für das Gas, das vom Gaszuführsystem zugeführt wird;

Flusssteuerungsventile (9), die sich in jeder Leitung zwischen der Gaszuführeinheit (8) und dem Gaseinlass (4) befinden; und

Pulverablassventile (13), die den Pulverablassanschlüssen (3) jedes Aufbereitungsbehälters (1) nachgeschaltet sind.

9. Verfahren zur Herstellung von Polyesterharzpulver gemäss Anspruch 8, wobei die Wärmebehandlungsvorrichtung ein Steuerungssystem besitzt, das das Pulverzuführsystem, jedes Flusssteuerungsventil und jedes Pulverablassventil steuert, wobei das Steuerungssystem besitzt:

eine Funktion zur Steuerung des Pulverzuführsystems, um eine bestimmte Menge des Harzpulvers den Pulverzuführanschlüssen jedes Aufbereitungsbehälters separat zuzuführen,

eine Funktion, die jedes Flusssteuerungsventil steuert, um das erwärmte Gas jedem Aufbereitungsbehälter für eine bestimmte Zeitspanne separat zuzuführen, nachdem die Zufuhr des Harzpulvers abgeschlossen ist,

eine Funktion, um jedes Pulverablassventil separat zu steuern, um nach der Gaszufuhr für eine bestimmte Zeitspanne das Harzpulver aus dem Aufbereitungsbehälter abzulassen, und

eine Funktion, um die obige Steuerung des Pulverzuführsystems, jedes Flusssteuerungsventil und jedes Pulverablassventil separat mit einer unterschiedlichen Fertigungsphase für jeden Aufbereitungsbehälter zu betreiben.

10. Verfahren zur Herstellung von Polyesterharzpulver gemäss Anspruch 9, wobei die Wärmebehandlungsvorrichtung ferner ein zweites Gaszuführsystem (8b), das dem Gaseinlass vorgeschaltet ist und das Gas mit einer unterschiedlichen Temperatur von dem Gaszuführsystem zuführt, und ein zweites Flusssteuerungsventil (9b), das in jeder Leitung zwischen dem zweiten Gaszuführsystem und dem Gaseinlass vorgesehen ist, umfasst und durch ein Steuerungssystem gesteuert wird; und das Steuerungssystem eine Funktion zur Steuerung jedes Flusssteuerungsventils und des zweiten Flusssteuerungsventils besitzt, um das erwärmte Gas und/oder das Gas mit unterschiedlicher Temperatur zuzuführen und **dadurch** die Gastemperatur unabhängig für jeden Aufbereitungsbehälter zu steuern.

11. Verfahren zur Herstellung von Polyesterharzpulver gemäss irgendeinem der Ansprüche 8 bis 10, wobei die Wärmebehandlungsvorrichtung ferner eine Gaszirkulationsleitung (15) umfasst, um das abgelassene Gas von der Gasablassdüse jedes Aufbereitungsbehälters zu dem Gaszuführsystem zurückzuführen.

12. Verfahren zur Herstellung von Polyesterharzpulver gemäss irgendeinem der Ansprüche 8 bis 11, wobei die Wärmebehandlungsvorrichtung ferner einen Feinpulverausscheider (11) umfasst, der der Gasablassdüse oder der Gaszirkulationsleitung nachgeschaltet ist.

13. Verfahren zur Herstellung von Polyesterharzpulver gemäss irgendeinem der Ansprüche 8 bis 12, wobei die Wärmebehandlungsvorrichtung ferner einen Ausscheider (12) für Wasser und/oder organische Verunreinigung umfasst.

14. Verfahren zur Herstellung einer Polyestervorform, das die Verwendung des Polyesterharzpulvers, hergestellt nach dem Verfahren gemäss irgendeinem der Ansprüche 1 bis 13, umfasst.

15. Vorrichtung zur Wärmebehandlung des Polyesterharzpulvers, wobei die Vorrichtung umfasst:

mehrere Aufbereitungsbehälter, die im oberen Bereich mit einem Pulverzuführanschluss und einer Gasablassdüse, im unteren Bereich mit einem Pulverablassanschluss und einem Gaseinlass im Bodenteil versehen sind;

ein Pulverzuführsystem, um das Harzpulver in die Zuführanschlüsse separat durch Umschalten einzuspeisen, wobei das System dem Pulverzuführanschluss vorgeschaltet ist;

ein Gaszuführsystem, um das Gas zu den Gaseinlässen zuzuführen, wobei das System den Gaseinlässen vorgeschaltet ist und eine ausreichende Gasflusskapazität besitzt, um das Harzpulver in den Behältern zu verwirbeln;

ein Heizsystem für das Gas, das vom Gaszuführsystem zugeführt wird;

Flusssteuerungsventile, die sich in jeder Leitung zwischen der Gaszuführeinheit (8) und dem Gaseinlass (4) befinden; und
Pulverablassventile, die dem Pulverablassanschluss (3) jedes Aufbereitungsbehälters (1) nachgeschaltet sind.

**Revendications**

1. Procédé pour produire une poudre de résine de polyester par traitement thermique de celle-ci comprenant le maintien de la poudre de résine de polyester dans plusieurs récipients de traitement disposés en parallèle, et l'exposition de la poudre de résine de polyester à un contact avec un gaz chauffé, lequel procédé comprend la répétition les étapes de:

   (a) fournir une certaine quantité de poudre de résine de polyester auxdits récipients de traitement,
   (b) réaliser un traitement thermique de ladite poudre de résine de polyester en fournissant le gaz chauffé auxdits récipients de traitement pendant une certaine durée et
   (c) décharger la poudre de résine de polyester traitée desdits récipients de traitement; et

   lequel procédé réalise lesdites étapes (a), (b) et (c) successivement avec une phase opérationnelle différente pour chaque récipient de traitement.

2. Procédé pour produire une poudre de résine de polyester selon la revendication 1, où ledit traitement thermique est une polymérisation à l'état solide de poudre de résine de polyester.

3. Procédé pour produire une poudre de résine de polyester selon la revendication 1 or 2, où une viscosité intrinsèque de ladite poudre de résine de polyester qui est fournie aux récipients de traitement est 0,20 à 0,66 dl/g.

4. Procédé pour produire une poudre de résine de polyester selon l'une quelconque des revendications 1 à 3, où une augmentation de la viscosité intrinsèque par traitement thermique dans le récipient de traitement est au moins 0,20 dl/g.

5. Procédé pour produire une poudre de résine de polyester selon l'une quelconque des revendications 1 à 4, où un diamètre de particule moyen en poids de la poudre de résine de polyester est 0,03 à 1,5 mm.

6. Procédé pour produire une poudre de résine de polyester selon l'une quelconque des revendications 1 à 5, où une température du gaz pour le traitement thermique de la poudre de résine de polyester dans l'étape (b) est ajustée pour satisfaire les conditions suivantes ;

$$120°C \leq T1 \leq 220°C$$

$$180°C \leq T2 \leq 250°C$$

$$20°C \leq T3 \leq 220°C \text{ (à condition que } T1 < T2 \text{ et } T3 < T2)$$

   où T1 est la température du gaz au début du traitement thermique, T2 est la température du gaz pendant le traitement thermique et T3 est la température du gaz à la fin du traitement thermique.

7. Procédé pour produire une poudre de résine de polyester selon l'une quelconque des revendications 1 à 6, où un gaz inerte est utilisé comme gaz fourni dans l'étape (b) de traitement thermique de poudre de résine de polyester.

8. Procédé pour produire une poudre de résine de polyester selon l'une quelconque des revendications 1 à 7, où un appareil de traitement thermique pour la poudre de résine de polyester est utilisé et l'appareil de traitement thermique comprend en outre :

   plusieurs récipients de traitement ayant un orifice de chargement de poudre (2) et une tubulure d'évacuation de gaz (5) disposés sur sa partie supérieure, un orifice de déchargement de poudre disposé sur sa partie inférieure, et une entrée de gaz (4) sur la partie de fond;

un système de fourniture de poudre (7) situé en amont dudit orifice de chargement de poudre et ayant une fonction telle que la poudre de résine peut être fournie audit orifice de chargement objectif par commutation un par un ;

un système de fourniture de gaz (8) pour fournir le gaz auxdites entrées de gaz, lequel système (8) est situé en amont desdites entrées de gaz et a une capacité suffisante de l'écoulement de gaz pour fluidiser la poudre de résine dans lesdits récipients;

un système de chauffage (10) pour le gaz fourni depuis ledit système de fourniture de gaz;

des soupapes de commande d'écoulement (9) situées à chaque passage d'écoulement entre ledit dispositif de fourniture de gaz (8) et ladite entrée de gaz (4); et

des soupapes de déchargement de poudre (13) situées en aval de l'orifice de déchargement de poudre (3) de chaque récipient de traitement (1).

9. Procédé pour produire une poudre de résine de polyester selon la revendication 8, où ledit appareil de traitement thermique a un système de commande qui commande un système de fourniture de poudre, chaque soupape de commande d'écoulement et chaque soupape de déchargement de poudre, lequel système de commande a:

une fonction de commander ledit système de fourniture de poudre de manière à fournir une certaine quantité de poudre de résine aux orifices de chargement de poudre de chaque récipient de traitement un par un,

une fonction qui commande chaque soupape de commande d'écoulement pour fournir le gaz chauffé pendant une certaine durée audit chaque récipient de traitement un par un après la fin de l'apport de poudre de résine,

une fonction de commander chaque soupape de déchargement de poudre une par une pour décharger la poudre de résine dudit chaque récipient de traitement après la fourniture de gaz d'une certaine durée, et

une fonction de mise en oeuvre de la commande ci-dessus sur ledit système de fourniture de poudre, chaque soupape de commande d'écoulement et chaque soupape de déchargement de poudre un par un avec une phase opérationnelle différente pour chaque récipient de traitement.

10. Procédé pour produire une poudre de résine de polyester selon la revendication 9, où ledit appareil de traitement thermique comprend en outre un second système de fourniture de gaz (8b) qui est situé en amont de l'entrée de gaz et fournit un gaz ayant une température différente depuis le système de fourniture de gaz, et une seconde soupape de commande d'écoulement (9b) qui est disposée dans chaque passage d'écoulement entre ledit second système de fourniture de gaz et ladite entrée de gaz et est commandée par un système de commande; et ledit système de commande a une fonction de commander chaque soupape de commande d'écoulement et ladite seconde soupape de commande d'écoulement de manière à fournir un gaz chauffé et/ou un gaz de température différente de manière à commander la température du gaz indépendamment pour chaque récipient de traitement.

11. Procédé pour produire une poudre de résine de polyester selon l'une quelconque des revendications 8 à 10, où ledit appareil de traitement thermique comprend en outre un conduit de circulation de gaz (15) pour renvoyer le gaz évacué des tubulures d'évacuation de gaz de chaque récipient de traitement au système de fourniture de gaz.

12. Procédé pour produire une poudre de résine de polyester selon l'une quelconque des revendications 8 à 11, où ledit appareil de traitement thermique comprend en outre un moyen d'élimination de poudre fine (11) qui est situé en aval de la tubulure d'évacuation de gaz ou du conduit de circulation de gaz.

13. Procédé pour produire une poudre de résine de polyester selon l'une quelconque des revendications 8 à 12, où ledit appareil de traitement thermique comprend en outre un moyen d'élimination (12) pour l'eau et/ou les impuretés organiques.

14. Procédé pour produire une ébauche de polyester comprenant l'utilisation de la poudre de résine de polyester produite par le procédé selon l'une quelconque des revendications 1 à 13.

15. Appareil pour traitement thermique de poudre de résine de polyester, lequel appareil comprend:

plusieurs récipients de traitement ayant un orifice de chargement de poudre et une tubulure d'évacuation de gaz disposés sur la partie supérieure, ayant un orifice de déchargement de poudre sur la partie inférieure, et ayant une entrée de gaz sur la partie de fond;

un système de fourniture de poudre pour distribuer la poudre de résine auxdits orifices de chargement en commutant un par un, lequel système est situé en amont dudit orifice de chargement de poudre;

un système de fourniture de gaz pour fournir un gaz auxdites entrées de gaz, lequel système est situé en amont desdites entrées de gaz et a une capacité suffisante de l'écoulement de gaz pour fluidiser la poudre de résine dans lesdits récipients ;

un système de chauffage pour le gaz fourni depuis lesdits système de fourniture de gaz;

des soupapes de commande d'écoulement situées à chaque passage d'écoulement entre ledit système de fourniture de gaz (8) et ladite entrée de gaz (4) ; et

des soupapes de déchargement de poudre situées en aval de l'orifice de déchargement de poudre (3) de chaque récipient de traitement (1).

FIG. 1

GAS ------▶

RESIN POWDER ——▶

FROM UPPER STREAM

TO DOWN STREAM

EP 1 598 386 B1

FIG. 2

FROM UPPER STREAM

FIG. 3

FROM UPPER STREAM

TO EACH TREATMENT VESSEL

FIG. 4

GAS ·······▶

RESIN POWDER ─────▶

FIG. 5

EP 1 598 386 B1

A: CHARGE   B: HEAT-TREATMENT   C: DISCHARGE

| VESSEL 1 | A | B | | C | A | B | | C | A |
| VESSEL 2 | C | A | B | | C | A | B | | C |
| VESSEL 3 | B | C | A | B | | C | A | B | |
| VESSEL 4 | B | | C | A | B | | C | A | B |
| VESSEL 5 | B | | C | A | B | | C | A | B |

ELAPSED TIME

**EP 1 598 386 B1**

## REFERENCES CITED IN THE DESCRIPTION

### Patent documents cited in the description

- US P4165420 A

- US P4205157 A